(19) Europäisches Patentamt
European Patent Office
Office européen des brevets

(11) **EP 1 758 774 B1**

(12) **EUROPÄISCHE PATENTSCHRIFT**

(45) Veröffentlichungstag und Bekanntmachung des Hinweises auf die Patenterteilung:
**16.01.2013 Patentblatt 2013/03**

(21) Anmeldenummer: **05754126.0**

(22) Anmeldetag: **24.06.2005**

(51) Int Cl.:
**B60T 8/00** (2006.01)     **B62D 37/00** (2006.01)

(86) Internationale Anmeldenummer:
**PCT/EP2005/052973**

(87) Internationale Veröffentlichungsnummer:
**WO 2006/000578 (05.01.2006 Gazette 2006/01)**

(54) **VERFAHREN UND EINRICHTUNG ZUM STABILISIEREN EINES FAHRZEUGS**

PROCESS AND DEVICE FOR STABILISING A VEHICLE

PROCEDE ET DISPOSITIF POUR STABILISER UN VEHICULE

(84) Benannte Vertragsstaaten:
**DE FR**

(30) Priorität: **25.06.2004 DE 102004030922**

(43) Veröffentlichungstag der Anmeldung:
**07.03.2007 Patentblatt 2007/10**

(73) Patentinhaber: **Continental Teves AG & Co. oHG
60488 Frankfurt (DE)**

(72) Erfinder:
• **WALDBAUER, Dirk
65817 Eppstein (DE)**
• **KRÖBER, Jürgen
56333 Winningen (DE)**
• **ALBAN, Thomas
Orion, MI 49359 (US)**

(74) Vertreter: **Graf, Ulrich
Continental Teves AG & Co.oHG
Guerickestrasse 7
60488 Frankfurt am Main (DE)**

(56) Entgegenhaltungen:
**WO-A-96/16846       WO-A-2004/041614
DE-A1- 19 515 060**

**Beschreibung**

Die Erfindung betrifft ein Verfahren und eine Einrichtung zum Stabilisieren eines Fahrzeugs mit einem durch das Fahrzeug gezogenen Anhänger, wobei das Fahrzeug in Bezug auf Schlingerbewegungen überwacht und beim Erkennen einer instabilen Schlingerbewegung ein die Schlingebewegung im wesentlichen dämpfendes Moment in das Fahrzeug eingeprägt wird.

Ein solches Fahrzeug mit Anhänger (Gespann) birgt die Gefahr, dass es infolge von schnellen Lenkbewegungen, Seitenwind oder Fahrbahnstörungen zu Schwingungen angeregt werden kann und zu Schlingern beginnt. Je nach Fahrgeschwindigkeit können die Schwingungen abklingen, konstant bleiben oder sich verstärken (ungedämpfte Schwingung). Bleiben die Schwingungen konstant, so hat das Gespann die kritische Geschwindigkeit erreicht. Oberhalb dieser Geschwindigkeitsschwelle ist ein Gespann instabil, darunter stabil, d.h. eventuelle Schwingungen klingen ab. Die Höhe dieser kritischen Geschwindigkeit ist abhängig von den Geometriedaten, den Reifensteifigkeiten, dem Gewicht und der Gewichtsverteilung des Zugfahrzeugs und des Anhängers. Außerdem ist die kritische Geschwindigkeit bei gebremster Fahrt niedriger, als bei Konstantfahrt. Bei beschleunigter Fahrt ist sie wiederum höher als bei konstanter Fahrt.

Verfahren zum Stabilisieren von Gespannen sind in unterschiedlichen Ausführungen bekannt. Aus der DE 199 64 048 A1 ist es bekannt, dass beim Erkennen einer Schlingerbewegung automatisch ein Giermoment in das Fahrzeug eingeprägt wird, das der Schlingerbewegung im wesentlichen gegenphasig ist. Die Erkennung des Schlingerns erfolgt durch Auswertung der gemessenen Querbeschleunigung, wobei die Geschwindigkeit und/oder der Lenkwinkel des Fahrzeugs betrachtet werden, um ein Schlingern von Lenkbewegungen des Fahrzeugs zu unterscheiden. Die Bremsdrücke sollen dabei in Abhängigkeit von der Frequenz, der Phase der Schlingerbewegung ermittelt werden.

Ferner soll in der DE 100 32 230 A1 die Gierbewegung des Fahrzeugs bestimmt und mittels Schwingungsanalyse (Fouriertransfomation) die Phase der Schwingung zu jedem Zeitpunkt ermittelt werden. Dieses ohne Erfassung des Lenkwinkels auskommende Verfahren sieht dann vor, mittels kurzem, phasenrichtigem, stoßartigem Puls in die linke oder rechte Bremse des Fahrzeugs einzugreifen um die Schwingung zu dämpfen.

Gemäß der EP 0765 787 B1 wird die Amplitude der Querbeschleunigung oder der Gierwinkelgeschwindigkeit (Gierrate) betrachtet, die innerhalb eines vorgegebenen Frequenzbandes liegen und einen vorgegebenen Schwellenwert überschreiten soll, damit Bremsdruck in den Bremsvorrichtungen der Räder des Fahrzeugs eingesteuert wird.. Dabei ist die Bedingung einzuhalten, dass eine Lenkbewegungsgröße unterhalb einer vorgegebenen Schwelle bleibt.

Weiterhin ist in der EP 0898 049 A2 ein Anhängergespann und ein Verfahren beschrieben, die beim Auftreten eines Differenzwerts aus der Ist- und Soll-Gierbewegung des Zugfahrzeugs den Lenkwinkel der Räder einer Fahrzeugachse der Zugmaschine zum Abbau der Differenz verändern. Dabei soll bevorzugt der Lenkwinkel aller Räder der lenkbaren Fahrzeugachse um den gleichen Betrag verändert werden.

Die gattungsgemäße DE 100 48 418 A1 sieht dagegen wieder ein Dämpfen einer analysierten Schwingung durch ein sich periodisch veränderndes Giermoment vor, das durch wechselseitigen Bremseingriff einer ESP-Steuerung auf das Fahrzeuge aufgebracht wird. Entsprechend DE 100 32 230 A1 wird mittels Fouriertransfomation die Amplitude der Gierwinkelabweichung berechnet und bei Überschreitung eines Schwellenwerts der Bremseingriff aktiviert. Dabei wird das sich periodisch verändernde Giermoment mit einer Phasenverzögerung zu der erfassten Fahrzeugschwingbewegung aufgebracht, wobei es eine Frequenz besitzt, die der Schwingfrequenz der erfassten periodischen Fahrzeugschwingfrequenz entspricht. Dies ist erforderlich, da eine ESP-Steuerung, die einen Bremseneingriff beinhaltet, der jedoch im Fahrstabilisationsfall bei einem Unter- bzw. Übersteuern des Fahrzeugs zum einen nicht empfindlich genug eingreift, und zum anderen zeitlich nicht optimal erfolgt.

Die bekannten Verfahren führen eine Schwingungsanalyse durch, wozu ein hoher Rechenbedarf erforderlich ist. Aufgrund des hohen Rechenbedarfs erhöhen sich die Funktionskosten erheblich. Dabei sieht die gattungsgemäße DE 100 48 418 A1 ein in das Fahrzeug einzuprägendes Giermoment vor, das proportional zu der abnehmenden Amplitude der gedämpften Fahrzeugschwingbewegung gesenkt wird. Bei der Erkennung der Fahrzeugschwingung und der Einprägung des Giermoments gehen alle Verfahren von einer periodischen Schwingung aus, die mittels eines gegenphasigen Giermoments bedämpft werden soll und die nach Bedämpfung periodisch bleibt und abnimmt. Überraschenderweise hat es sich jedoch gezeigt, dass eine Einprägung eines Gegenmoments die Schwingung des Fahrzeugs mit Anhänger nicht bedämpft, sondern nur den Schwingungsverlauf verändert, d.h. die Schwingung aus dem Tritt gebracht und komplett zerstört wird.

Aus der gattungsgemäßen WO2004/041614 ist des weiteren ein Verfahren bekannt, bei dem das Zugfahrzeug eines Anhängergespanns auf Schlingerbewegungen überwacht wird und bei Erkennen von tatsächlichem oder erwartetem instabilen Fahrverhalten fahrstabilisierende Maßnahmen ergriffen werden. Diese Maßnahmen sehen eine Bewertung der Schlingerbewegung im Hinblick auf kritische oder unkritische Fahrzustände vor sowie eine Verzögerung des Zugfahrzeugs in Abhängigkeit von den Amplituden der Schlingerbewegung.

Der Erfindung liegt die Aufgabe zugrunde, ein weiteres Verfahren und eine weitere Vorrichtung zur Stabilisierung eines Fahrzeugs mit einem Anhänger anzugeben, die auch bei nicht periodischen Fahrzeugschwingungen eine Dämpfung ermöglichen.

Erfindungsgemäß wird diese Aufgabe durch ein Verfahren gemäß Anspruch 1 und eine Vorrichtung gemäß Anspruch 5 gelöst. Ein Vorteil des Verfahrens und der Vorrichtung (TSA=Trailer Stability Assist)) ist, dass keine Schwingungsanalyse notwendig ist. Zur Erkennung und Plausibilisierung der Schwingung genügt es, den Eingriff derart auszulösen, wie es beispielsweise in der WO2004/041612 A1 beschrieben ist. Der Eingriff selbst wird über die Regelabweichungsänderungsrichtung gesteuert und über die Schwingungsamplitude dimensioniert. Das dabei für die Auswertung vorgesehene Regelabweichungssignal wird aus gemessener Gierwinkelgeschwindigkeit und in einem Fahrzeugmodell berechneten Soll-Gierwinkelgeschwindigkeit gebildet und mit einem die Lenkdynamik beschreibenden Signal gewichtet. Als Signal, das die Lenkdynamik beschreibt, wird bevorzugt die Ableitung der Modellgierrate verwendet. Das besondere an diesem Signal ist, dass es die Reaktion des Fahrzeugs auf die Lenkdynamik gut wieder gibt.

So führt zum Beispiel bei niedriger Geschwindigkeit ein Wedeln am Lenkrad zu einer geringen Schwingung des Fahrzeugs, bei hoher Geschwindigkeit jedoch führt die gleiche Lenkbewegung zu einer wesentlich stärker ausgeprägten Fahrzeugschwingung. Der geringen Schwingung kann das Fahrzeugmodell folgen und es entwickelt sich keine Regelabweichung zwischen Soll- und Mess-Gierwinkelgeschwindigkeit und somit kommt es nicht zur Auslösung eines Lenk- und/oder Bremseingriffs; die starke Schwingung jedoch führt zu einer großen Regelabweichung, so dass TSA-Eingriffe am Fahrzeug möglich werden, ohne dass ein Anhänger mit dem Fahrzeug verbunden ist.

Die gleiche Lenkbewegung führt bei unterschiedlicher Geschwindigkeit mehr oder weniger wahrscheinlich zu einer TSA-Auslösung.

Bevorzugt verwendet man daher ein Signal, das sowohl die Lenkbewegung als auch die Geschwindigkeit berücksichtigt. Dieses Signal ist die Ableitung der Modellgierrate, da dieses Signal das Fahrzeugverhalten repräsentiert.

Alternativ verwendet man die Lenkdynamik und die Fahrzeuggeschwindigkeit um das Differenzsignal zu gewichten.

Diese Erkennung und Plausibilisierung der Schwingung macht den Regler sehr einfach und ressourcensparend. Zudem wird die Schwingung durch die Momenteneingriffe stark "deformiert", was eine Schwingungsanalyse und Ermittlung von Frequenz und Phase stark erschwert. Der hier vorgestellte Regler ist phasenunabhängig und wird zeitlich ausschließlich von der Regelabweichungsänderungsrichtung gesteuert.

Ein Vorteil des Verfahrens und der Vorrichtung gegenüber dem rein abbremsenden Eingriff ist, dass der Momenteneingriff bei den meisten Schlingerzuständen genügt, das Fahrzeug-Anhänger-Gespann zu stabilisieren. Sollte sich nach Beendigung des Eingriffs die Schwingung wieder ausbilden, können beliebig viele weitere Eingriff erfolgen. In besonders kritischen Fällen kann als Sicherheitsnetz der abbremsende Eingriff zugeschaltet werden. Dabei ist es möglich, dass der Momenteneingriff überlagert weiterläuft. Dies hat den Vorteil, dass der abbremsende Eingriff weniger heftig erfolgen und früher beendet werden kann. Dies führt zu geringerer Gefährdung des nachfolgenden Verkehrs und höherem Komfort.

Ein Ausführungsbeispiel ist in der Zeichnung dargestellt und wird im Folgenden näher beschrieben.

Es zeigen

Fig. 1    ein Fahrzeug mit Anhängerstabilisierungs-System
Fig. 2    ein Blockschaltbild zur Gesamtstruktur eines Systems zur Fahrstabilitätsregelung,
Fig. 3    ein Blockschaltbild zur Struktur der Gegenmomentregler,
Fig. 4    eine schematische Darstellung der gefilterten Regelabweichung und der daraus ermittelten Druckanforderung
Fig. 5    eine schematische Darstellung über die Ermittlung des Regeleintritts
Fig. 6    zeigt das Ende eines TSA-Eingriffs mit oszillierendem Differenzwert.

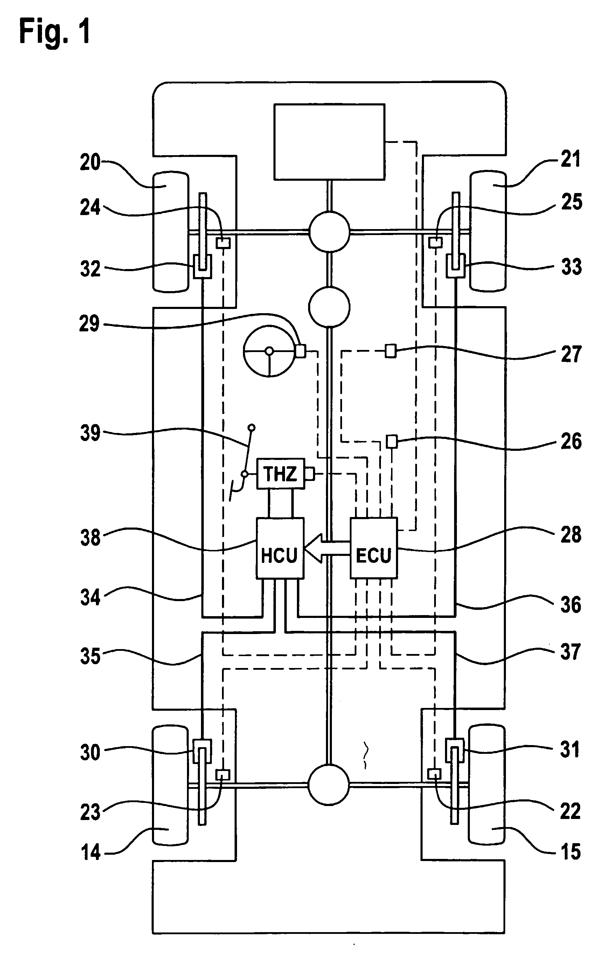

In den Fig. 1 ist ein Fahrzeug mit Anhänger-Stabilisierungssystem TSA, Bremsanlage, Sensorik und Kommunikationsmöglichkeiten schematisch dargestellt. Die vier Räder sind mit 14, 15, 20, 21 bezeichnet. An jedem der Räder 14, 15, 20, 21 ist je ein Radsensor 22 bis 25 vorgesehen. Die Signale werden einer Regeleinheit 28 zugeführt, die anhand vorgegebener Kriterien aus den Raddrehzahlen eine Fahrzeugreferenzgeschwindigkeit $v_{Ref}$ ermittelt. Weiterhin sind ein Giergeschwindigkeitssensor 26, ein Querbeschleunigungssensor 27 und ein Lenkradwinkelsensor 29 mit der Regeleinheit 28 verbunden. Jedes Rad weist außerdem eine individuell ansteuerbare Radbremse 30 bis 33 auf. Diese Bremsen werden hydraulisch betrieben und empfangen unter Druck stehendes Hydraulikfluid über Hydraulikleitungen 34 bis 37. Der Bremsdruck wird über einen Ventilblock 38 eingestellt, wobei der Ventilblock von elektrischen Signalen Fahrer unabhängig angesteuert wird, die in der elektronischen Regeleinheit 28 erzeugt werden. Über ein von einem Bremspedal betätigten Hauptzylinder kann von dem Fahrer Bremsdruck in die Hydraulikleitungen eingesteuert werden. In dem Hauptzylinder bzw. den Hydraulikleitungen sind Drucksensoren P vorgesehen, mittels denen der Fahrerbremswunsch erfasst werden kann. Über eine Schnittstelle(CAN) ist die Regeleinheit 28 mit dem Motorsteuergerät verbunden

Über das Stabilisierungssystem TSA für Fahrzeuge mit Anhänger mit Bremsanlage, Sensorik und Kommunikationsmöglichkeiten, das die Ausstattungselemente

•    vier Raddrehzahlsensoren

- Drucksensor P(Bremsdruck im Hauptzylinder $p_{main}$)
- Querbeschleunigungssensor (Querbeschleunigungssignal $a_{ist}$, Querneigungswinkel $\alpha$)
- Giergeschwindigkeitssensor ($\dot{\psi}$)
- Lenkradwinkelsensor (Lenkwinkel $\delta$, Lenkwinkelgeschwindigkeit $\dot{\delta}$)
- individuell ansteuerbare Radbremsen
- Hydraulikeinheit (HCU)
- Elektronik-Steuereinheit (ECU)

aufweist, lässt sich eine Aussage über die jeweilige Fahrsituation und damit über eine Bestimmung der Ein- und Austrittsbedingungen eine aktivierte bzw. deaktivierte Regelungssituation realisieren. Damit ist eine Hauptkomponente des Verfahrens zur Stabilisierung von Fahrzeugen mit Anhängern, die Fahrsituationserkennung, möglich, während die andere Hauptkomponente, die Interaktion mit dem Bremssystem, ebenfalls mit diesem Stabilisierungssystem realisiert werden kann. Im folgenden wird das Verfahren anhand eines Eingriffs in das Bremssystem des Fahrzeugs beschrieben, wobei alternativ das mit dem Anhänger-Stabilisierungssystem in das Fahrzeug eingeprägte Gegenmoment auch mit einem aktiven Lenksystem, zum Beispiel über eine Überlagerungslenkung, umgesetzt werden kann, wobei ein Eingriff in die Radbremsen und ein Eingriff in das Lenksystem auch gleichzeitig erfolgen können.

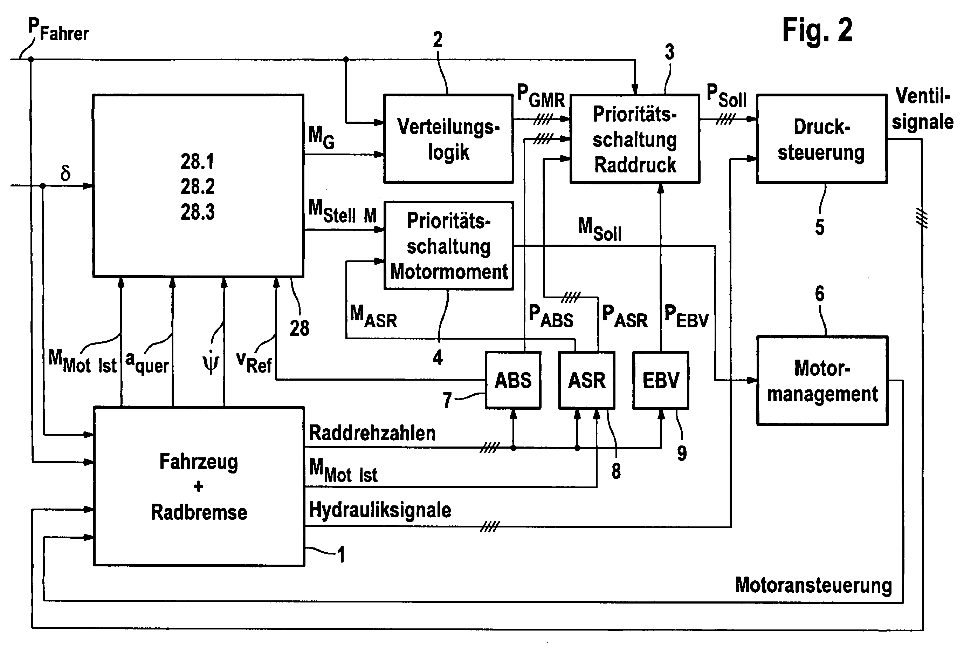

Eine generelle Beschreibung eines Fahrzeugreglers mit dem Stabilisierungssystems TSA erfolgt nun anhand von Figur 2.

Auf das Fahrzeug 1 wirken die vom Fahrer gegebenen Größen Fahrerbremsdruck $P_{Fahrer}$ bzw. $P_{THZ}$ und Lenkwinkel $\delta$. Am Fahrzeug 1 werden die hieraus resultierenden Größen Motoristmoment $K_{Motist}$, Querbeschleunigung $a_{quer}$, Gierwinkelgeschwindigkeit $\dot{\psi}_{mess}$, Raddrehzahlen $v_{wheel}$ und Hydrauliksignale wie Radbremsdrücke $P_{THZ}$ gemessen. Zur Auswertung dieser Daten weist der Fahrzeugregler mehrere elektronische Regler 7,8,9 und 28 auf, die jeweils dem Antiblockiersystem ABS, der Antriebsschlupfregelung ASR, der elektronischen Bremskraftverteilung EBV und der Giermomentregelung GMR mit Kippverhinderung ARP zugeordnet sind. Die elektronischen Regler für ABS 7, ASR 8, EBV 9 und GMR 28.3 sowie ARP 28.2 können unverändert dem Stand der Technik entsprechen und sind daher in der Zeichnung nicht gesondert dargestellt.

Die Raddrehzahlen werden den Reglern für das Antiblockiersystem 7, die Antriebsschlupfregelung 8 und die elektronische Bremskraftverteilung 9 zugeführt. Der Regler 8 der Antriebsschlupfregelung und der Regler 28 erhalten zusätzlich noch Daten über das herrschende Motormoment, das Motoristmoment $M_{Motist}$. Außerdem erhält die Regelung von den Sensoren die Daten über die Querbeschleunigung $a_{quer}$ und die Gierwinkelgeschwindigkeit $\dot{\psi}$ des Fahrzeugs. Da im Regler 7 des ABS über die Einzelraddrehzahlen der Fahrzeugräder ohnehin eine Fahrzeugreferenzgeschwindigkeit $v_{Ref}$ ermittelt wird, anhand derer ein übermäßiger Bremsschlupf eines der Räder festgestellt werden kann, muss eine derartige Referenzgeschwindigkeit nicht im Regler 28 berechnet werden, sondern wird vom ABS-Regler 7 übernommen. Wo die Fahrzeugreferenzgeschwindigkeit berechnet wird, ob sie vom ABS-Regler übernommen oder im Regler 28 zur Fahrzeugstabilisierung eine eigene Berechnung vorgenommen wird, macht für den Ablauf der Stabilisierung nur einen kleinen Unterschied. Dasselbe gilt auch für die Längsbeschleunigung $a_{long}$ des Fahrzeugs. Entsprechend könnte der Wert hierfür auch im ABS-Regler 7 ermittelt und an den Regler 28 weitergegeben werden. Für eine Bestimmung des Fahrbahnreibwertes $\mu$ gilt dies nur eingeschränkt, da zur Stabilisierung eines Fahrzeugs mit Anhänger ein genauer bestimmter Reibwert wünschenswert ist, als er für das Blockierschutzsystem ermittelt wird.

Alle elektronischen Regler des Fahrzeugreglers, also die Regler für TSA 28.1, ARP 28.2, GMR 28.3, ABS 7, ASR 8 und EBV 9 arbeiten parallel und unabhängig voneinander anhand ihrer eigenen Regelstrategien Bremsdruckvorgaben $P_{TSA}$, $P_{ARP}$, $P_{GMR}$, $P_{ABS}$, $P_{ASR}$, $P_{EBV}$ für die einzelnen Räder aus.

Die Druckvorgaben $P_{TSA}$ des Reglers 28.1 für die einzelnen Radbremsdrücke werden folgendermaßen ermittelt:

Der Regler 28.1 berechnet zunächst jeweils ein Gegenmoment $M_G$, welches zur Stabilisierung des Fahrzustandes bei schlingerndem Fahrzeug bei einer Kurven- oder Geradeausfahrt führt, wenn es durch entsprechende Bremsbetätigung erzeugt wird. Dieses $M_G$ wird jeweils einer Verteilungslogik 2 zugeführt, welche auch als Teil des Reglers 28 dargestellt werden könnte. In diese Verteilungslogik 2 fließt außerdem ein möglicherweise vorhandener Fahrerwunsch zur Fahrzeugverzögerung ein, der anhand des Fahrerbremsdruckes $P_{Fahrer}$ (=$P_{THZ}$) erkannt wird. Die Verteilungslogik 2 berechnet aus den vorgegebenen Gegenmoment $M_G$ und aus dem gewünschten Fahrerbremsdruck Gegenmomentregelbremsdrücke $p_{GMR}$ für die Radbremsen, welche individuell für die einzelnen Räder sehr unterschiedlich sein können. Diese Gegenmomentregelbremsdrücke $P_{GMR}$ werden genauso wie die von den übrigen Reglern 7, 8, 9, 28.2, 28.3 für ABS, ASR, EBV und ARP sowie GMR zur Funktionsoptimierung berechneten Druckvorgaben einer Prioritätsschaltung 3 für die Radbremsdrücke zugeführt. Diese Prioritätsschaltung 3 ermittelt unter Berücksichtigung des Fahrerwunsches Sollraddrücke $p_{soll}$ für eine optimale Fahrstabilität bzw. ein optimales Fahrverhalten. Diese Solldrücke können entweder den Druckvorgaben eines einzelnen dieser Regler entsprechen oder aber eine Überlagerung darstellen.

Ähnlich wie mit den Radbremsdrücken kann mit dem Motormoment verfahren werden. Während ABS und EBV nur auf die Radbremsen einwirken, kann bei TSA, ARP, GMR und ASR auch ein Eingriff in das Motormoment vorgesehen werden. Die berechneten Vorgaben $M_{StellM}$ und $M_{ASR}$ für das Motormoment werden wieder in einer Prioritätsschaltung 4 ausgewertet und zu einem Sollmoment überlagert. Dieses Sollmoment $M_{soll}$ kann jedoch genausogut nur der berechneten Vorgabe eines der Regler entsprechen.

Anhand der berechneten Soll-Vorgaben für den Radbremsdruck $p_{soll}$ und für das Motormoment $M_{soll}$ kann nun eine Fahrzeugregelung durch Bremsen- und/oder Motoreingriff vorgenommen werden. In die Drucksteuerung 5 fließen dazu noch Hydrauliksignale oder Werte ein, die den tatsächlichen Radbremsdruck wiedergeben. Die Drucksteuerung 5 erzeugt hieraus Ventilsignale, die an die Regelventile der einzelnen Radbremsen im Fahrzeug 1 abgegeben werden. Das Motormanagement 6 steuert nach Maßgabe von $M_{soll}$, den Antriebsmotor des Fahrzeugs, wodurch wiederum ein geändertes Motoristmoment erzeugt wird. Hieraus ergeben sich dann jeweils wieder neue Eingangsgrößen für die elektronischen Regler 7, 8, 9 und 28 und der Fahrstabilitäts-Anlage.

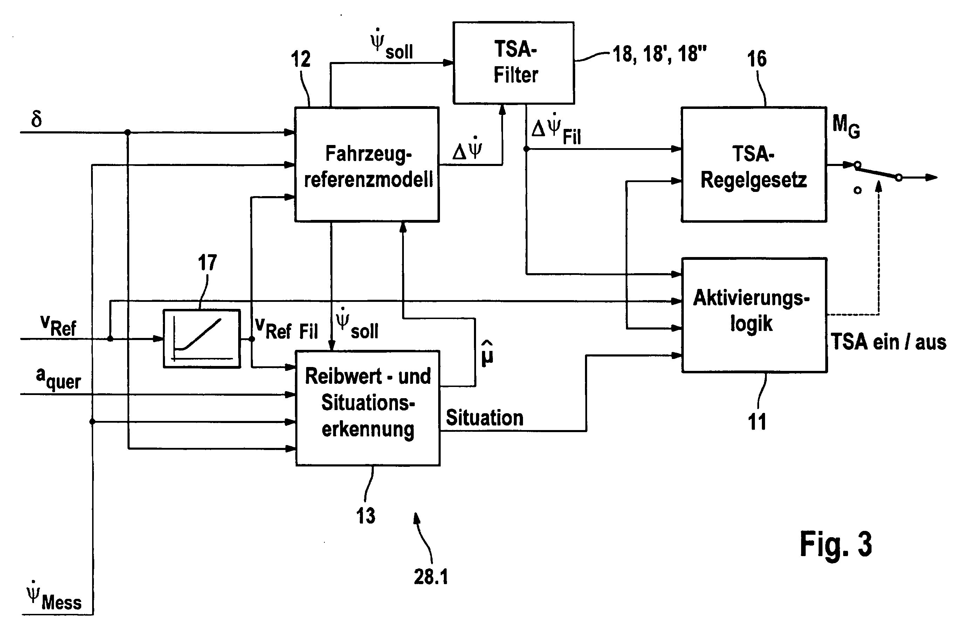

Die Struktur des TSA(Trailer Stability Assist)-Reglers 28.1 zur Stabilisierung des Fahrzeugs 1 mit Anhänger ist in Figur 3 schematisch dargestellt.

Fig. 3 zeigt in einem Blockschaltbild, wie innerhalb des Fahrstabilitätsreglers 28 mit dem TSA-Regler 28.1 das Gegenmoment $M_G$ für die Verteilungslogik 2 ermittelt wird. Hierzu fließen als Eingangsgrößen der Lenkwinkel $\delta$, die Fahrzeugreferenzgeschwindigkeit $v_{Ref}$ aus dem ABS-Regler 7, die gemessene Querbeschleunigung $a_{quer}$ sowie die gemessene Gierwinkelgeschwindigkeit $\dot{\psi}_{Mess}$ ein. Die Fahrzeugreferenzgeschwindigkeit $v_{Ref}$ durchläuft einen Filter 17, welcher bei niedrigen Geschwindigkeiten einen konstanten Wert oberhalb Null ansetzt, damit bei weiteren Rechnungen der Nenner eines Bruchs nicht gleich Null wird. Der ungefilterte Wert von $v_{Ref}$ wird einer Aktivierungslogik 11 zugeführt, welche Fahrzeugstillstand erkennt.

Diese direkte Erfassung der Fahrzeugreferenzgeschwindigkeit $v_{Ref}$ durch die Aktivierungslogik 11 kann auch wegfallen, wenn angenommen wird, dass Fahrzeugstillstand vorliegt, wenn die gefilterte Fahrzeugreferenzgeschwindigkeit $v_{RefFil}$ ihren konstanten Minimalwert einnimmt.

Im Fahrstabilitätsregler 28 ist ein Fahrzeugreferenzmodell 12 abgelegt, welches anhand des Lenkwinkels $\delta$, der gefilterten Fahrzeugreferenzgeschwindigkeit vRefFil sowie der gemessenen Gierwinkelgeschwindigkeit $\dot{\psi}_{Mess}$ eine Vorgabe für eine Änderung der Gierwinkelgeschwindigkeit $\Delta\dot{\psi}$ berechnet, auf das der TSA-Regler 28.1 zugreift.

Alle elektronischen Regler der Fahrstabilitätsregelung 28, also die Regler für TSA 28.1, ARP 28.2, GMR 28.3 arbeiten mit dem in dem Fahrzeugmodell 12 berechneten Abweichung der Gierwinkelgeschwindigkeit $\Delta\dot{\psi}$, wobei jedoch diese auf der Soll-Gierwinkelgeschwindigkeit $\dot{\psi}_{soll}$ beruhende Vorgabe auch parallel und unabhängig voneinander anhand ihrer eigenen Regelstrategien in jedem Regler 28.1, 28.2, 28.3 ermittelt werden kann.

Zur TSA-Gegenmomentregelung kann auf unterschiedliche Fahrzeug-Referenzmodelle zurückgegriffen werden. Am vorteilhaftesten gestaltet sich die Berechnung anhand des dynamischen Einspur-Modells, d.h. dass Vorderräder und Hinterräder in diesem Modell jeweils paarweise zu einem Rad zusammengefasst sind, welches sich auf der Fahrzeuglängsachse befindet. Wesentlich komplexer werden Berechnungen, wenn ein Zweispur-Modell zugrundegelegt wird. Da bei einem Zweispur-Modell aber auch seitliche Verschiebungen des Massenschwerpunkts (Wank-Bewegungen) berücksichtigt werden können, sind die Ergebnisse genauer.

Für das bevorzugte dynamische Einspur-Modell stehen in Zustandsraumdarstellung die Systemgleichungen:

$$\dot{\beta} = c_{11}\frac{\beta}{v}\dot{\Psi} + c_{12}\frac{\dot{\Psi}}{v^2} + c_{13}\frac{\delta}{v}$$

$$\ddot{\Psi} = c_{21}\beta + c_{22}\frac{\dot{\Psi}}{v} + c_{23}\delta$$

Der Schwimmwinkel $\beta$ und die Gierwinkelgeschwindigkeit $\dot{\psi}$ stellen die Zustandsgrößen des Systems dar. Die auf das Fahrzeug einwirkende Eingangsgröße stellt dabei der Lenkwinkel 5 dar, wodurch das Fahrzeug nach Integration von $\dot{\psi}$ die Gierwinkelgeschwindigkeit $\dot{\psi} = \int\dot{\psi}\, dt$ als Ausgangsgröße erhält. Die Modellkoeffizienten $c_{ii}$ sind dabei folgendermaßen gebildet:

$$c_{11} = -\frac{c_h + c_v}{m} \qquad c_{12} = \frac{c_h l_h - c_v l_v}{m} \qquad c_{13} = \frac{c_v}{m}$$

$$c_{21} = \frac{c_h l_h - c_v l_v}{\Theta} \qquad c_{22} = -\frac{c_h l_h^2 + c_v l_v^2}{\Theta} \qquad c_{23} = -\frac{c_v l_v}{\Theta}$$

Dabei stehen $c_h$ und $c_v$ für die resultierenden Steifigkeiten aus Reifen-, Radaufhängungs- und Lenkungselastizität an der Hinter- bzw. Vorderachse. $l_h$ und $l_v$ stehen für die Abstände der Hinterachse und der Vorderachse vom Fahrzeugschwerpunkt. $\Theta$ ist das Gierträgheitsmoment des Fahrzeugs, also das Trägheitsmoment des Fahrzeugs um seine Hochachse.

In diesem Modell werden Längskräfte und Schwerpunktverlagerungen nicht berücksichtigt. Auch gilt diese Näherung nur für kleine Winkelgeschwindigkeiten. Die Genauigkeit dieses Modells nimmt also mit kleineren Kurvenradien und größeren Geschwindigkeiten ab. Um auch in diesem Bereich eine optimale Arbeitsweise des Fahrzeugreferenzmodells 12 zu gewährleisten, kann das oben beschriebene lineare dynamische Fahrzeugmodell 12 auch mit einem stationären Kreisfahrtmodell versehen sein, auf das im Bereich kleiner Geschwindigkeiten des Fahrzeugs 1 umgeschaltet wird.

Um die Vorgaben im physikalisch möglichen Rahmen zu halten, wird zu diesen Rechnungen auch der Fahrbahnreibwert $\mu$ benötigt, der in einer Reibwert- und Situationserkennung 13 als Schätzwert $\hat{\mu}$ berechnet wird. Bei hinreichender Genauigkeit des im Rahmen der Antiblockierregelung ermittelten Reibwertes kann auch letzterer verwendet werden. Oder aber im ABS-Regler 7 wird der im Regler 28.1 berechnete Reibwert übernommen.

Die Reibwert- und Situationserkennung 13 verwendet für ihre Rechnungen die gefilterte Referenzgeschwindigkeit $v_{RefFil}$, die gemessene Fahrzeugquerbeschleunigung $a_{quer}$, die gemessene Gierwinkelgeschwindigkeit $\dot{\psi}_{Mess}$, sowie den Lenkwinkel $\delta$.

Die Situationserkennung 13 unterscheidet verschiedene Fälle wie Geradeausfahrt, Kurvenfahrt, Rückwärtsfahrt und Fahrzeugstillstand. Fahrzeugstillstand wird dann angenommen, wenn die gefilterte Fahrzeugreferenzgeschwindigkeit $v_{RefFil}$ ihren konstanten Minimalwert einnimmt. Anstelle der ungefilterten Fahrzeugreferenzgeschwindigkeit kann also auch diese Information zur Erkennung eines Fahrzeugstillstandes der Situationserkennung 13 zugeführt werden. Zur Erkennung der Rückwärtsfahrt wird ausgenutzt, dass bei gegebenem Lenkwinkel $\delta$ die Gierwinkelgeschwindigkeit $\dot{\psi}$ entgegengesetzt orientiert ist wie bei Vorwärtsfahrt. Hierzu wird die gemessene Gierwinkelgeschwindigkeit $\dot{\psi}_{Mess}$ mit der vom Fahrzeugreferenzmodell 12 vorgegebenen Soll-Giergeschwindigkeit $\dot{\psi}_{soll}$ verglichen. Wenn die Vorzeichen stets entgegengesetzt sind und dies auch für die zeitlichen Ableitungen der beiden Kurven gilt, so liegt eine Rückwärtsfahrt vor, da $\dot{\psi}_{soll}$ stets für Vorwärtsfahrt berechnet wird, weil gebräuchliche Drehzahlsensoren keine Information über die Raddrehrichtung erfassen. Liegen jedoch Raddrehzahlsensoren vor, die die Drehrichtung erfassen, kann auch dieses Signal für die Erkennung der Rückwärtsfahrt der Situationserkennung 13 zugeführt werden.

Ein Programm 16 zur Umsetzung des Gegenmomentregelgesetzes verwendet die gefilterte Regelabweichung $\Delta\dot{\psi}_{Fil}$ für die Gierwinkelgeschwindigkeit, welche sich als die gefilterte Differenz aus der gemessenen Gierwinkelgeschwindigkeit $\dot{\psi}_{Mess}$ und der anhand des Fahrzeugreferenzmodells 12 berechneten Soll-Gierwinkelgeschwindigkeit $\dot{\psi}_{soll}$ darstellt. Der Differenzwert $\Delta\dot{\psi}$ aus gemessener Gierwinkelgeschwindigkeit $\dot{\psi}_{Mess}$ und der berechneten Soll-Gierwinkelgeschwindigkeit $\dot{\psi}_{soll}$ durchläuft einen Tiefpass-Filter 18', so dass keine extremen Spitzen auftreten. In dem TSA-Filter 18 wird darüber hinaus bei schnellen Änderungen der Soll-Gierwinkelgeschwindigkeit $\dot{\psi}_{soll}$ der Differenzwert $\Delta\dot{\psi}$ hin zu kleineren Werten verändert. Durch die Gewichtung mittels einem von der Änderung der Soll-Gierwinkelgeschwindigkeit $\dot{\psi}_{soll}$ abhängigen Faktor, werden bei schnellen Lenkbewegungen, bei denen das Fahrzeug dem Fahrzeugmodell nicht mehr folgen kann, Fehlerkennungen ausgeschlossen. Alternativ kann die Gewichtung mit einem die Lenkwinkelbeschleunigung oder die Lenkwinkelgeschwindigkeit wiedergebenden Signal erfolgen. Der Tiefpass-Filter 18' und der sollgiergeschwindigkeitsabhängige Filter 18'' sind Bestandteil des TSA-Filters 18.

Das Programm 16 arbeitet permanent, um stets aktuelle Regelgrößen parat zu haben. Ob diese Stellmomente allerdings an die in Fig. 1 dargestellte Verteilungslogik 2 weitergegeben werden, hängt von der Aktivierungslogik 11 ab.

Die Aktivierungslogik 11 empfängt nicht nur den Wert der ungefilterten Fahrzeugreferenzgeschwindigkeit $v_{ref}$ sondern auch die gefilterte Abweichung $\Delta\dot{\psi}_{Fil}$ der Soll-Gierwinkelgeschwindigkeit $\dot{\psi}_{soll}$ von der gemessenen Gierwinkelgeschwindigkeit $\dot{\psi}_{Mess}$ sowie eine Information aus der Situationserkennung 13, wenn Rückwärtsfahrt vorliegt.

Befindet sich das Fahrzeug in Rückwärtsfahrt, so wird die Übertragung vom $M_G$ unterbrochen. Dasselbe gilt, wenn Fahrzeugstillstand erkannt wird oder wenn die Auswertung der gefilterten Gierwinkelgeschwindigkeitsänderung $\Delta\dot{\psi}_{Fil}$ zu einer Größe führt, die eine Regelung erforderlich macht. Der Größe wird erreicht, wenn der Betrag der Amplituden der Halbwellen von $\Delta\dot{\psi}_{Fil}$ mehrmals hintereinander einen bestimmten Wert überschreiten. Die logische Schaltung zur Berechnung des Motorstellmoments $M_{StellM}$ ist nicht dargestellt.

Dabei können neben dem Fahrzeugmodell 12 auch die Reibwert- und Situationserkennung 13, und das Regelgesetz sowie die Aktivierungslogik 11 auch Bestandteil eines konventionellen, jedoch modifizierten Gierratenreglers GMR sein oder als separater Bestandteil eines TSA-Reglers zur Stabilisierung von Fahrzeugen mit Anhängern ausgebildet sein. Die Verteilungslogik 2, die Prioritätenschaltung 3 und die Drucksteuerung 5 sind bevorzugt Teil des modifizierten Gierratenreglers 28.3 und setzen das im TSA-Regeler 28.1 ermittelte Gegenmoment $M_G$ um. Dessen prinzipielle Strategie zur Stabilisierung eines Fahrzeugs besteht im ungebremsten Fall in der gezielten Abbremsung einzelner Räder durch aktiven Druckaufbau im entsprechenden Radbremszylinder. Hierdurch wird durch Seitenkraftabbau und gleichzeitigen Längs- oder Bremskraftaufbau ein stabilisierendes Drehmoment in die Fahrzeugstruktur eingeprägt. Im Gegensatz zum ungebremsten Fall muss bei gleichzeitiger Fahrerbremsung oder aktiver, vom Fahrer unabhängigen Bremsung zur Einleitung eines stabilisierenden Gegenmoments von einer vorhandenen Vordruck- und damit auch Kraftverteilung an den Rädern ausgegangen werden, die sich durch den Vordruck oder ggf. durch das vom ABS (Antiblockier-System) eingesteuerte Druckniveau in den Radbremszylindern einstellt.

Zur besseren Erläuterung wird in den folgenden Abschnitten ein Eingriff in die Radbremszylinder und die Bestimmung der Druckanforderung $P_{soll}$ beschrieben.

Berechnung der Reglerausgangsgröße $M_G$

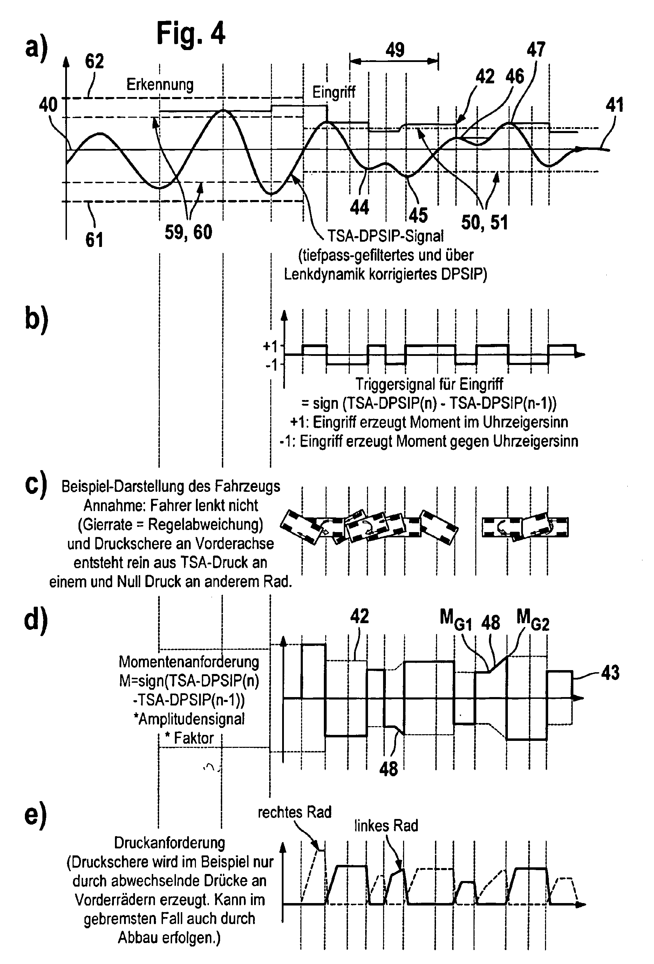

Die Grundelemente des Regelkreises sind in den Figuren 2 und 3 zu entnehmen. Die gesamte Reglerraus-gangsgröße $M_G$ des TSA-Reglers 28.1 bestimmt sich nach der Erkennung des Regelfalls gemäß der in Figur 4 dargestellten Weise:

Das tiefpass-gefilterte und über die Lenkdynamik (Soll-Gierwinkelgeschwindigkeit) korrigierte Differenz-Signal 41 aus der gemessenen Gierwinkelgeschwindigkeit $\dot{\psi}_{Mess}$ und der anhand des Fahrzeugreferenzmodells 12 berechneten Soll-Gierwinkelgeschwindigkeit $\dot{\psi}_{soll}$ wird in bezug auf das Vorzeichen untersucht, das sich aus der Beziehung {TSA-$\Delta\dot{\psi}_{Fil}(n)$}-{TSA-$\Delta\dot{\psi}_{Fil}(n-1)$} ergibt. Anhand dieser Beziehung wird die Tendenz aus dem gefilterten Differenzwert $\Delta\dot{\psi}_{Fil}$ gebildet, indem die Abweichung des aktuell gefilterten Werts $\Delta\dot{\psi}_{Fil}(n)$ von dem im vorangegangenen Loop ermittelten Wert $\Delta\dot{\psi}_{Fil}(n-1)$ ermittelt wird. Ein Loop dauert zwischen 5 bis 30 msec. Wie der Figur 4a in Verbindung mit 4b zu entnehmen ist, nimmt das Vorzeichen bei ansteigendem Signal $\Delta\dot{\psi}_{Fil}$ einen positiven Wert, nämlich +1 und bei fallendem Signal $\Delta\dot{\psi}_{Fil}$ einen negativen Wert, nämlich -1, an. Dabei ist das Vorzeichen unabhängig davon, ob sich der Differenzwert $\Delta\dot{\psi}_{Fil}$ des aus der gemessenen Gierwinkelgeschwindigkeit und der modellbasierten Soll-Gierwinkelgeschwindigkeit gefilterten Signals 41 oberhalb oder unterhalb der des Nulldurchgangs 40 befindet.

Mit den Triggersignalen +1 und -1 wird die Eingriffsseite des Fahrzeugs bestimmt. Dabei bedeutet +1 ein Gegenmoment im Uhrzeigersinn und -1 ein Gegenmoment gegen Uhrzeigersinn.

Die Ausgangsgröße $M_G$ des TSA-Reglers 28 wächst proportional zur Fahrzeuginstabilität und damit auch zum erforderlichen Gegenmoment, das zur gewünschten Fahrzeugstabilisierung notwendig ist. Dieses Gegenmoment wird durch einseitigen Druckaufbau in den Aktuatoren (Radbremsen) in die Fahrzeugstruktur eingeprägt. Im Detail bewirken die eingeprägten Bremsmomente an den Rädern einen Bremskraftaufbau in Fahrzeuglängsrichtung und einen Seitenkraftabbau in Querrichtung, die bei geeigneter Auswahl der Eingriffsräder das gewünschte Gegenmoment erzeugen. Alternativ kann der Radschlupf überwacht werden. Überschreitet der Radschlupf gewisse Schlupfschwellen, deren Höhen vorteilhaft abhängig von der Raddynamik gewählt werden, dann wird das angeforderte Bremsmoment reduziert oder ganz zurückgenommen, wodurch das Gegenmoment ausschließlich über Bremskraftaufbau in Längsrichtung erzeugt wird. Dabei wird die Schlupfschwelle bei hoher Dynamik eher niedriger, bei geringer Dynamik eher höher gewählt. Bei schlingerndem Fahrzeug wird für den Druckaufbau das jeweils über das Triggersignal +1 oder -1 bestimmte Vorderrad ausgewählt. Figur 4c zeigt dies schematisch an einem vereinfachten Beispiel. Ihm liegt die Annahme zugrunde, dass der Fahrer nicht lenkt, so dass die gemessene Gierwinkelgeschwindigkeit der im wesentlichen der gefilterten Regelabweichung entspricht. Das Gegenmoment $M_G$ wird über eine Druckschere an der Vorderachse in den Radbremsen 32 oder 33 erzeugt. Unter der Bedingung, dass in den Radbremsen kein Vordruck $p_{ref}$ eingesteuert ist, entspricht der Bremsdruck in der einen Radbremse 32 oder 33 dem TSA-Bremsdruck und an der jeweils anderen Radbremse 32 oder 33 ist der Bremsdruck 0bar. Erkennbar wird der Wechsel von der linken Radbremse 32 zu der rechten Radbremse 33 über das Triggersignal +1 bzw. -1 gesteuert.

Die Reglerausgangsgröße $M_G$ wird in Abhängigkeit von dem Betrag der Amplitude des gefilterten Differenzwerts $\Delta\dot{\psi}_{Fil}$ berechnet. Von dem gefilterten Signal $\Delta\dot{\psi}_{Fil}$ 41 wird hierzu bei jeder Halbwelle der maximale Augenblickswert 42 ermittelt und bis zum nächsten maximalen Augenblickswert 42 gehalten. Die maximalen Augenblickswerte 42 jeder Halbwelle werden über die Beziehung $\Delta\dot{\psi}_{Fil}(n)$-$\Delta\dot{\psi}_{Fil}(n-1)$ bestimmt. Der bei Regelungsbeginn ermittelte Ausgangswert $\Delta\dot{\psi}_{Fil}$ bietet beim jedem Regelschritt (Loop) des TSA-Reglers 28.1 im Verlauf der Erkennung die Möglichkeit der Aktua-lisierung. Ist $\Delta\dot{\psi}_{Fil}$ positiv und $\Delta\dot{\psi}_{Fil}(n)$-$\Delta\dot{\psi}_{Fil}(n-1)$ negativ, wird die Amplitude gespeichert. Wenn danach die Tendenz wieder positiv wird, wird der Wert der gespeicherten Amplitude dann erhöht, wenn $\Delta\dot{\psi}_{Fil}$ größer wird, als die bisher gespeicherte Amplitude. Die Amplitude wird im weiteren Verlauf dann überschrieben bzw. aktualisiert, wenn $\Delta\dot{\psi}_{Fil}$ negativ wird und die Tendenz sich umkehrt, also positiv ist. Auch hier wird die Amplitude weiter nachgeführt, wenn die Tendenz sich umkehrt und $|\Delta\dot{\psi}_{Fil}|$ noch größer wird als der gespeicherte Wert.

Dieses Gegenmoment berechnet sich damit folgendermaßen:

$$M_G = \text{Vorzeichen}\{TSA-\Delta\dot{\psi}_{Fil}(n)\}-\{TSA-\Delta\dot{\psi}_{Fil}(n-1)\} \ast A\Delta\dot{\psi}_{Fil} \ast \text{Faktor}$$

mit:

$M_G$: Gegenmoment

$\{TSA-\Delta\dot{\psi}_{Fil}(n)\}-\{TSA-\Delta\dot{\psi}_{Fil}(n-1)\}$ : Änderungstendenz der gefilterten Giergeschwindigkeit-Regelabweichung

$A\Delta\dot{\psi}_{Fil}$ : Amplitude der gefilterten Giergeschwindigkeit-Regelabweichung

Faktor: Frei wählbarer Faktor zur Anpassung des Eingriffs an Fahrzeug/Bremse/usw.

Der Faktor berücksichtigt dabei die Bremsenauslegung, die Fahrzeugmasse, die Fahrzeuggröße, die Spurweite, die Massenverteilung u.dgl.

Figur 4d zeigt den Verlauf der Momentenanforderung 43 proportional zum Verlauf des Betrags der Amplitude 42 der gefilterten Regelabweichung $\Delta\dot{\psi}_{Fil}$ aus gemessener Gierwinkelgeschwindigkeit $\dot{\psi}_{Mess}$ und der berechneten Soll-Gierwinkelgeschwindigkeit $\dot{\psi}_{soll}$. Der Eingriff besteht aus mehreren Druckimpulsen deren Größe von dem Wert bzw. Höhe der Amplitude 42 bestimmt wird. Das Gegenmoment $M_G$ wird auf dem Wert der Amplitude solange gehalten bis das Triggersignal +1, -1 das Vorzeichen wechselt oder die Regelung beendet wird. Liegen im Signal der gefilterten Regelabweichung $\Delta\dot{\psi}_{Fil}$ mehrere Oberwellen 44,45 bzw. 46,47 in einer Halbwelle vor, wird eine Amplitude 44 oder 45 in der zuvor beschriebenen Weise ermittelt, deren Augenblickswert zu einem Gegenmoment $M_{G1}$ führen würde, das nicht dem maximalen Wert der Amplitude entsprechen würde. Aufgrund der Aktualisierung wird der Augenblickswert jedoch bis zum maximalen Wert der Amplitude 45 nachgeführt, da kein Nulldurchgang 40 erkannt wird. Der Übergang 48 von dem Gegenmoment $M_{G1}$ auf das Gegenmoment $M_{G2}$ entsteht.

Die Größe der notwendigen Druckerhöhung $\Delta p_{auf}$ bestimmt sich für die Vorderachse des Fahrzeugs aus dem Zusammenhang

$$\Delta p_{auf,v} = |M_G|,$$

d.h. die Reglerausgangsgröße $M_G$ ist physikalisch - abgesehen vom Vorzeichen - bereits ein Druck. Sollte die Reglerausgangsgröße $M_G$ auch unter Einbeziehung der Radbremsen 30, 31 an der Hinterachse umgesetzt werden oder sollte das Gegenmoment $M_G$ von einem Bremsdruck an allen Radbremsen überlagert werden, lautet die Bestimmungsgleichung für die Hinterachse:

$$\Delta p_{auf,h} = K_{Br}|M_G|,$$

Der Gradient der Umsetzung eines Bremszylinderdrucks in eine Bremskraft ist für die Vorder- und Hinterachse nicht gleich. Diesen Umstand erfasst der Faktor $K_{Br}$, der in der folgenden Weise berechnet wird :

$$K_{Br} = \frac{A_{K,v}}{A_{K,b}}\frac{r_{w,v}}{r_{w,b}}\frac{\dot{C}_v}{\dot{C}_h}$$

Dabei sind :

$A_K$ - Bremskolbenfläche

$r_w$ - wirksamer Bremsenhalbmesser

$C$ - Bremsenkonstante

In Gleichung für den Faktor $K_{Br}$ wurde angenommen, dass sowohl der Reibwert der Paarung Bremsbelag / Bremsfläche, als auch die Reifenradien der Vorder- und Hinterachse gleich sind. Die in Gleichung bzw. berechnete Druckerhöhung für die Radbremsen 32, 33 der Vorderachse ist im ungebremsten Fall, d.h. für den Vordruck null, gleich der absolut vorzugebenden Druckanforderung $p_{auf}$. Für den gebremsten Fall hingegen ist bereits in allen Radbremsen ein Vordruck vorhanden, der für die Druckerhöhung des TSA (Trailer Stability Assist) berücksichtigt werden muss. Daher bestimmt sich die Druckanforderung in der folgenden Weise:

$$p_{auf} = p_{ref} + \Delta\, p_{auf}$$

Der Druck $p_{ref}$ ist ein Referenzdruck von dem ausgehend die Druckerhöhung vorgenommen wird. Dieser Druck ist gleich dem Istdruck des im Druckaufbau befindlichen Rades bei Regelungseintritt (Wert wird abgespeichert), wobei eine Kompensation von äußeren Einflussgrößen während des Regelungsablaufs wirksam ist. Erfasst werden hier Drucksteigerungen auf dem gegenüberliegenden Rad der gleichen Achse, die z.B. durch Erhöhung des Fahrervordrucks oder Steigerung des ABS-Regelniveaus (infolge Reibwertsprung o.ä.) verursacht wurden. Der ungebremste Fall ist in Gleichung für den gebremsten Fall für $p_{ref} = 0$ enthalten.

Figur 4e zeigt die Druckanforderung $p_{auf}$ durch die in Abhängigkeit vom Vorzeichen des Gradienten {TSA-$\Delta\dot{\psi}_{Fil}$($n$)}-{TSA-$\Delta\dot{\psi}_{Fil}$(n-1)} abwechselnden Drücke in den Radbremsen 32, 33 an der Vorderrädern 20, 21.

Wird die Druckanforderung $P_{auf}$ und der darausfolgende Druck im Radbremszylinder zunehmend gesteigert, dann erreicht das entsprechende Rad zunächst den Schlupfbereich des größten Reibbeiwerts in Fahrzeuglängsrichtung. Bis zu diesem Punkt wird zum einen Bremskraft in Längsrichtung aufgebaut und des weiteren Seitenführungskraft abgebaut. Eine weitere Drucksteigerung bewirkt darauffolgend keine wesentliche Erhöhung der Bremskraft mehr, jedoch wird die Seitenführungskraft weiter reduziert, d.h. auch in diesem Bereich ist eine weitere Erhöhung des Drucks sinnvoll und wird daher auch durchgeführt. Eine Grenze findet dieser Effekt jedoch bei großen Schlüpfen (größer 80 %), in dem nur noch eine geringe Seitenkraftabnahme festzustellen ist. Aus diesem Grunde und um ein komfortminderndes Blokkieren des Rades zu verhindern, wird die Druckanforderung auf ein bestimmtes Niveau begrenzt.

Dieses Niveau wird von einem Schlupfregler festgelegt. Dieser berechnet unter Berücksichtigung des am Rad gemessenen Istschlupfs ständig im Hintergrund einen Solldruck $p_{slip}$ im Radzylinder, der zu einem Sollschlupf von 50 % führen würde. Wenn dieser Druck $p_{slip}$ kleiner ist, als die in der Gleichung für den gebremsten Fall bestimmte Druckanforderung $p_{auf}$, dann wird $p_{slip}$ die neue Druckanforderung $p_{auf}$. Bedingt durch die Regelgüte des Schlupfreglers stellt sich in diesem Betriebsbereich vorzugsweise ein Schlupfband von ca. 30 - 70 % ein. Kann dabei die Druckanforderung $p_{auf}$ an der über das Vorzeichen des Gradients bestimmten Radbremse nicht umgesetzt werden, erfolgt am gegenüberliegenden Rad der Vorderachse ein Druckabbau.

Möchte man jeden Abbau von Seitenkraft verhindern, kann der Sollschlupf auf niedrigere Werte eingestellt werden.

In Überlagerung mit einer Fahrerbremsung oder einer vom System initiierten Abbremsung vom TSA-Regler 28 oder einer anderen Assistenzfunktion kann alternativ zum über den Fahrerdruck oder dem vom Assistenzsystem aufgebauten Systemdruck hinaus aufgebaute Bremsdruck zusätzlich oder ersatzweise ein Druckabbau am diagonal gegenüberliegenden Rades erfolgen. Dabei kann die weiter oben beschriebene Beziehung zwischen $M_G$ und dem Vorderachssdruck bzw. $M_G$ und dem Hinterachsdruck verwendet werden, um Druckaufbauanteile auf die Hinterachse umzurechnen und dort am diagonalen Hinterrad als Druckabbau umzusetzen. Alternativ kann ein Druckaufbau an der Hinterachse als Abbau an die Vorderachse transferiert werden.

Der Eingriff wird beendet, wenn eine ausreichende Dämpfung des Fahrzeugs mit Anhänger erreicht ist. Eine Ausreichende Dämpfung der Schlingerbewegung des Fahrzeugs ist gegeben, wenn die Austrittsregelschwellen 50, 51 von einer Amplitude der gefilterten Regelabweichung $\Delta\dot{\psi}_{Fil}$ unterschritten werden. Dabei sind getrennte Ein- 59, 60 und Austrittsschwellen 50, 51 für die Amplituden der gefilterten Regelabweichung $\Delta\dot{\psi}_{Fil}$ vorgesehen. Der Abstand der Eintrittsschwelle und der Austrittsschwelle kann typischerweise 0,5°/s betragen. Diese Hysterese führt dazu, dass der Eingriff so lange anhält, bis eine ausreichende Bedämpfung erreicht wurde. Dies gewährleistet, dass es einen definierten Eingriff gibt und es nicht dazu kommt, dass der TSA-Regler 28.1 ständig aktiviert und wieder deaktiviert wird.

Zum Ende eines TSA-Eingriffs kann es geschehen, dass die Schwingung zerstört wurde, das Signal $\Delta\dot{\psi}_{Fil}$ jedoch weiter leicht osziliert und kein Nulldurchgang des Signals zur Beendigung des TSA-Eingriffs führt. Verschiedene Plausibilitätsüberwachungen führen in einem solchen Fall zwar nach einer gewissen Zeit zu einer Beendigung der Regelung, währenddessen kann es jedoch zu weiteren hochfrequenten Momenteneingriffen kommen, die zudem, je nach Höhe der zuletzt gelernten Amplitude, heftig ausfallen können. Dieses Verhalten ist sehr unkomfortabel, da subjektiv das Gespann bereits stabilisiert ist. Um dies zu verhindern ist eine Überwachung der Eingriffsfrequenz vorgesehen. Folgen die wechselseitigen Eingriffe sehr kurz aufeinander und befindet sich das $\Delta\dot{\psi}_{Fil}$-Signal bereits unterhalb der Austrittsschwelle, bleibt der TSA-Regler 28.1 zwar weiter aktiv, die wechselseitigen Eingriffe werden jedoch unterdrückt und wirken sich daher nicht weiter aus."

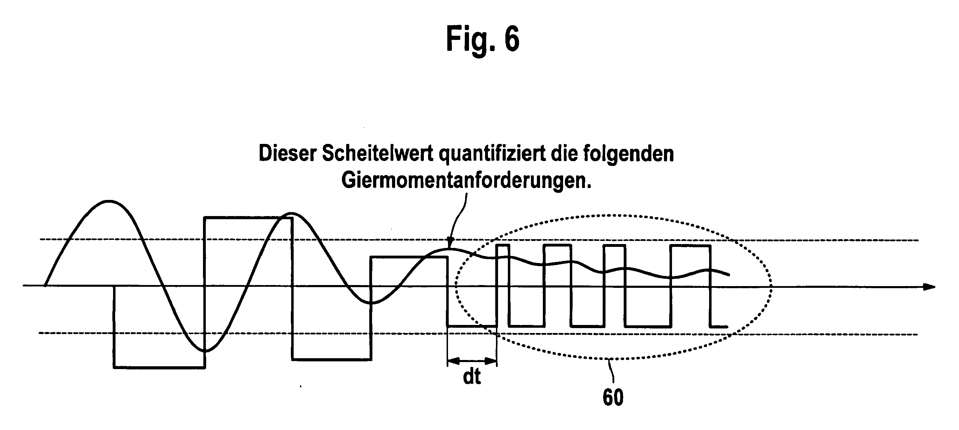

Figur 6 zeigt das Ende eines TSA-Eingriffs. dt repräsentiert die Zeit eines Eingriffs. Im dargestellten Fall erkennt man die schnell aufeinanderfolgenden Eingriffe im gepunkteten Bereich 60. Diese würden nach dem ersten erkannten kurzen Eingriff im folgenden unterdrückt, bis TSA beendet ist, oder die Austrittsschwelle (gestrichelte Linien) wieder überschritten sind.

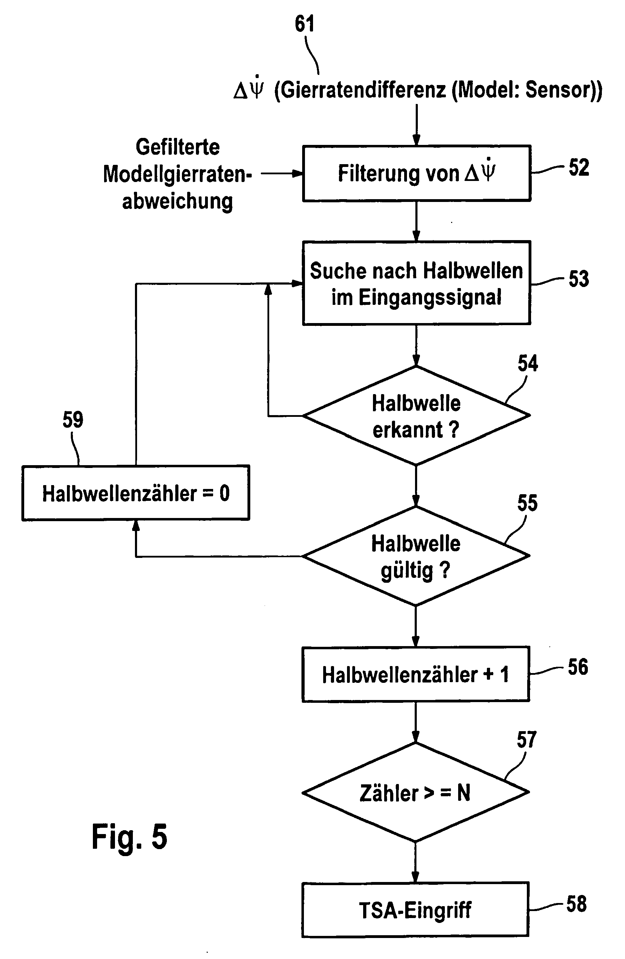

Eine besonders vorteilhafte Ausgestaltung der Erfindung sieht eine Zweistufigkeit der Erkennung des Schlingerns der Fahrzeug-Anhänger-Gespanns vor. Figur 5 zeigt vereinfacht die logischen Abläufe bei der Erkennung des Regelungseintritts:

Ausgehend von der im Fahrzeugmodell 12 ermittelten Giergeschwindigkeitsdifferenz $52(\Delta\dot{\psi})$ aus modellbasierter Soll- und gemessener Gierwinkelgeschwindigkeit, wird in Schritt 53 der Differenzwert 53 im TSA-Filter 18 gefiltert. Das heißt, dass der Differenzwert 52 einen Tiefpass durchläuft, so dass keine extremen Spitzen auftreten. Darüber hinaus wird er im Filter 18 über ein die Lenkdynamik wiedergebendes Signal, vorzugsweise die Soll-Gierwinkelgeschwindigkeit, gewichtet bzw. korrigiert. Schritt 53 umfasst die Suche nach Halbwellen in dem Eingangssignal der gefilterten Regelabweichung $\Delta\dot{\psi}_{Fil}$, die anhand zweier Nulldurchgänge, einem Maximum, einer Mindestamplitude und einer definierten Anfangssteigung analysiert werden. In der Raute 54 wird abgefragt, ob die Halbwelle erkannt wurde. Ist dies nicht der Fall, wird auf Schritt 53 zurückgeschaltet und die Suche nach Halbwellen fortgesetzt. Wurde die Halbwelle anhand der vorstehenden Kriterien erkannt, wird diese in Raute 55 auf ihre Gültigkeit hin überprüft. Dazu wird die Halbwelle auf die folgenden Bedingungen hin überprüft:

■ das Maximum der Halbwelle muss einen bestimmten, vorzugsweise von der Fahrzeugreferenzgeschwindigkeit $v_{Ref}$ abhängigen Schwellenwert überschreiten
■ der Abstand der Nulldurchgänge (Halbwellenlänge) muss im signifikanten Frequenzbereich 0,5 bis 1,5 Hz liegen
■ § ein Band (typischerweise +/-0,3-0,4°/s) um den Nullpunkt muss nach einer bestimmten Zeit verlassen werden. Dadurch werden nur definierte Nulldurchgänge berücksichtigt.
■ ab der zweiten gefundene Welle:

- die Halbwellenlänge muss in etwa mit der vorhergehenden übereinstimmen
- die Querbeschleunigung darf im Mittel nicht größer als ein bestimmter Wert sein
- die Querbeschleunigung muss im Zeitpunkt des Maximums der Halbwelle das gleiche Vorzeichen haben
- die Querbeschleunigung muss eine Halbwelle etwa gleicher Dauer aufweisen
- die Soll-Gierwinkelgeschwindigkeit muss im Zeitpunkt des Maximums der Halbwelle das gleiche Vorzeichen haben
- die Soll-Gierwinkelgeschwindigkeit muss um einen gewissen Betrag kleiner sein als die Fahrzeuggierwinkelgeschwindigkeit

Sind diese Bedingungen alle erfüllt ist die Halbwelle gültig und der Halbwellenzähler in Schritt 56 wird inkrementiert. Bei einer deutlichen Amplitudenabnahme (aktuelle Amplitude nur noch X% der vorhergehenden Amplitude) wird der Zähler nicht inkrementiert sondern behält seinen Wert bei, was zu einem späteren Eintritt in die Regelung führen kann. Sind die Bedingungen nicht alle erfüllt, wird in Schritt 59 der Halbwellenzähler auf Null zurückgesetzt. In Raute 57 wird festgestellt ob N Halbwellen erkannt sind. Überschreitet die Anzahl N der gültigen Halbwellen einen Erkennungsschwellenwert, ist die Bedingung zur Erkennung eines schlingernden Fahrzeugs mit Anhänger erfüllt. Dies löst im Schritt 58 eine Momentenregelung des Fahrzeugs aus.

Die Zweistufigkeit wird erreicht, indem in der zuvor beschriebenen Weise weitere höhere Eintrittsschwellen 61, 62 vorgesehen sind, über die fahrerunabhängig, d.h. durch Ansteuerung des Motor-Pumpen-Aggregats oder des Boosters der Bremsanlage, das Fahrzeug mit dem Anhänger über alle vier Radbremsen 30, 31, 32, 33 abgebremst werden kann. Der das Fahrzeug mit dem Anhänger abbremsenden Eingriff basiert auf der Bedingung, dass das Maximum der Halbwelle einen bestimmten, gegenüber den Eintrittsschwellen 59, 60 höheren Schwellenwert 61, 62 überschreiten muss. Liegen die Bedingungen vor, kommt es beim Eingriff in die Radbremsen zu einem überlagerten Momenten- und Verzögerungseingriff. Dieser Eingriff dient als Sicherheitsnetz für besonders kritische Situationen. Der Regler 28.1 berechnet für diese Situation neben dem Gegenmoment $M_G$ Druckvorgaben $p_{ref}$ für alle Räder 15, 14, 20, 21 des Fahrzeugs mit Anhänger, die in Abhängigkeit von der Stärke der Schlingerbewegung ermittelt werden. Zu betrachtende Signale sind ebenfalls die Amplituden des gefilterten Differenz-Signals $\Delta\dot{\psi}_{Fil}$ aus der gemessenen Gierwinkelgeschwindigkeit $\dot{\psi}_{Mess}$ und der anhand des Fahrzeugreferenzmodells 12 berechneten Soll-Gierwinkelgeschwindigkeit $\dot{\psi}_{soll}$.

Nach einer weiteren Alternative kann die Zweistufigkeit erreicht werden, wenn nicht die Eintrittsschwellen zweistufig ausgeführt werden, sondern die Amplitudentendenz betrachtet wird. zeigt die Schwingung einen bestimmten Dämpfungsgrad, dann befindet sich die Fahrzeuggeschwindigkeit u.U. noch nicht oder nur knapp über der kritischen Geschwindigkeit. Damit genügt der Momenteneingriff. Wird dieser Dämpfungsgrad überschritten, ist wahrscheinlich die kritische Fahrgeschwindigkeit deutlich überschritten. Ein zusätzlicher Zähler zählt diese besonders kritischen Halbwellen und startet dann, nach Erreichen der Anzahl N2 zusätzlich zum Momenteneingriff den abbremsenden Eingriff. Der Dämpfungsgrad wird dadurch ermittelt, dass die Höhe der Amplituden von Halbwelle zu Halbwelle ausgewertet wird. Steigt die Höhe um einen gewissen Wert an, liegt eine besonders kritische Situation an. Momenten- und Verzögerungseingriff werden gestartet. Ist dies nicht der Fall, genügt der Momenteneingriff.

Alternativ kann eine Auswertung von mit dem Lenkdynamiksignal gewichteten Querkraftsignalen, z.B. der Gierwinkelgeschwindigkeit und/oder der Querbeschleunigung und/oder den Frequenzen mindestens einer Querkraft (Gierwinkelgeschwindigkeit und/oder Querbeschleunigung) und/oder die Fahrzeuggeschwindigkeit zur Bestimmung des Verzögerungseingriffs herangezogen werden.

Neben dem überlagerten Eintritt in die Momenten- und Verzögerungsregelung, ist auch der Fall vorgesehen, dass die Amplituden die Eintrittsschwelle 59, 60 überschreiten und zu einem späteren Zeitpunkt auch die höhere Eintrittsschwelle 61, 62 überschritten wird. Wurden genügend Halbwellen oberhalb der Schwelle 59, 60 ermittelt, erfolgt der Momenteneingriff wie zuvor beschrieben. Wird später eine genügende Anzahl Halbwellen auch oberhalb der Schwelle 61, 62 ermittelt, erfolgt die Abbremsung, wobei der Momenteneingriff weiter aktiv bleibt (vergleichbar dem zuvor beschrieben Fall mit überlagerter Bremsung, z.B. mit einer Fahrerbremsung). Da davon ausgegangen wird, dass die Abbremsung das Fahrzeug mit Anhänger in einen Geschwindigkeitsbereich zurückführt, in dem das Gespann nicht mehr instabil ist (unterhalb der kritischen Geschwindigkeit), wird die für den Momenteneingriff vorgesehene Hysterese nicht beibehalten. Vielmehr wird nun die Schwelle 50, 51 verwendet, den Zeitpunkt des Abbruchs beider Eingriffe festzulegen. Der Abbruch des Verzögerungseingriffs erfolgt dann, wenn eine Halbwellenamplitude die Schwelle 50, 51 unterschreitet. Dadurch wird sichergestellt, dass die Beendigung der Abbremsung auch eine Beendigung des Momenteneingriffs zur Folge hat.

Der TSA-Eingriff kann so effektiv zu einer Stabilisierung führen, dass selbst dann das Gespann beruhigt wird, wenn es sich noch oberhalb der kritischen Geschwindigkeit befindet. Dadurch kommt es zu dem Effekt, dass kurz nach der Beendigung der ersten Regelung eine zweite Aktivierung folgt, da das Gespann wiederaufschwingt. Um hier möglichst kurzfristig wiedereinsteigen zu können, wird nach einem Eingriff für eine gewisse Zeit (ca. 3s) ein bestimmter Modus gestartet, der einen Neustart bei weniger als der normalerweise geforderten Halbwellenanzahl startet. Sind z.B. sonst 3 gültige Halbwellen erforderlich, startet TSA in diesem Modus bereits nach einer erkannten gültigen Halbwelle. Im Idealfall erfolgt dadurch die Reaktivierung so kurz auf den ersten Eingriff, dass der Fahrer es als einen zusammenhängenden Eingriff empfindet.

Aus den die Amplituden des gefilterten Differenz-Signals $\Delta\dot{\psi}_{Fil}$ wird über eine Zustandserkennung ermittelt, wie kritisch der Fahrzustand ist. Von dem Fahrzustand abgeleitet wird bei einem eher unkritischen Zustand eine niedrige und bei einem eher kritischen Zustand eine hohe Verzögerung angefordert.

Dabei kann zusätzlich zum Ist-Zustand eine zeitliche Betrachtung des Differenz-Signals $\Delta\dot{\psi}_{Fil}$ angestellt werden. So ist bei einer aktuell unkritischen aber tendenziell stärker werdenden Schwingung eine höhere Verzögerung anzufordern und dem gegenüber bei einer aktuell kritischen aber abklingenden Schwingung eine niedrigere oder u.U. keine Verzögerung mehr anzufordern. Insbesondere hat eine frühzeitige Reduktion der Verzögerung den Vorteil, dass die Endgeschwindigkeit des Gespanns nicht zu gering ist, was ansonsten, insbesondere auf Autobahnen, zu einer Gefährdung des Gespanns und des rückwärtigen Verkehrs führen könnte.

Zur Ermittlung der in die Radbremsen 30 bis 33 vorzusehenden Bremsdruckverlaufs wird ein Signal betrachtet, das die Ist-Verzögerung des Fahrzeugs mit Anhänger repräsentiert. Ein solches Verzögerungssignal kann aus den Signalen der am Fahrzeug vorhandenen ABS-Radsensoren 22 bis 25 berechnet werden. Aus den von den Radsensoren gemessenen Radgeschwindigkeiten lassen sich die gefilterten Radverzögerungen ermitteln und als Ist-Größen in Bezug zu den über die einzusteuernden Bremsdrücke gewünschten Soll-Verzögerungen setzen.

Diese Ermittlung berücksichtigt den Ausschluss fehlerhafter Radsensoren, den Ausschluss dynamischer Räder (Radverzögerung darf nicht zu groß oder zu klein sein, sie muss zwischen $+k_1$ g und $-k_2$ g liegen), den Ausschluss von Rädern mit sehr viel Schlupf, und dergleichen.

Durch ein solches Signal kann die Verzögerungsanforderung exakt geregelt werden. Besonders vorteilhaft ist dabei, dass von außen wirkende Kräfte und Einflüsse (z.B. Gegenwind, Beladungszustand des Fahrzeug-Anhänger-Gespanns, Art des Annhängers) sowie geneigte Fahrbahnen (bergab/bergauf) durch die Rückführung der Ist-Verzögerung ausgeregelt werden und somit immer die gewünschte Verzögerung eingestellt wird.

Neben den Verzögerungen werden die Schlüpfe der Räder beobachtet und beim ersten Anzeichen von Blockierneigung eines Rades an einer Achse die Druckanforderungen an der Achse reduziert oder abgeschaltet und erst dann wieder erhöht oder aufgeschaltet, wenn die Blockierneigung nicht mehr besteht. Hierzu werden während der ABS-Regelung die Schlupfeinläufe ausgewertet, indem die Radgeschwindigkeit bei Radschlupfbeginn und die Radgeschwindigkeit bei Radschlupfende sowie die Zeit zwischen den beiden Radgeschwindigkeiten gespeichert wird. Durch eine Berechnung der Gradienten nach der Beziehung ((v2-v1)/dt und Mittelwertbildung der Gradienten für alle Räder 14, 15, 20 21 wird über die so berechnete Verzögerung die Druckanforderung reduziert. Dadurch erreicht man, dass es zu keiner Reduzierung der Seitenführungskräfte kommt, das Fahrzeug also nicht destabilisiert wird und lenkbar bleibt. Besonders vorteilhaft ist, dass die Reduktion der Druckanforderung immer an beiden Rädern einer Achse erfolgt, um keine zusätzlichen Giermomente aufzubauen, die das Fahrzeug destabilisieren könnten.

Eine weitere besonders vorteilhafte Ausgestaltung sieht vor, die Verzögerungsanforderung mit dem Ende der Regelung nicht schlagartig sondern gestuft wegzunehmen. Damit erreicht man eine sanfte Reduzierung der Fahrzeug-Anhänger-Verzögerung, was den Komfort erhöht und die Gefahr der Verunsicherung des Fahrers reduziert.
Die Kriterien ermöglichen eine Regelung in Kurvenfahrt und sogar bei Lenkbewegungen des Fahrers.

**Patentansprüche**

1. Verfahren zum Stabilisieren eines Fahrzeugs mit einem durch das Fahrzeug gezogenen Anhänger, wobei das Fahrzeug in Bezug auf Schlingerbewegungen überwacht und beim Erkennen einer instabilen Schlingerbewegung ein die Schlingebewegung im wesentlichen dämpfendes Gegenmoment in das Fahrzeug eingeprägt wird mit den Schritten
Ermitteln der Gierwinkelgeschwindigkeit des Fahrzeugs Ermitteln der Referenz-Gierwinkelgeschwindigkeit in einem Fahrzeugmodell
Bilden eines Differenzwerts aus der Gierwinkelgeschwindigkeit und der Referenzgierwinkelgeschwindigkeit **gekennzeichnet durch** die weiteren Schritte
Gewichten des Differenzwerts mit dem abgeleiteten Signal der Referenz-Gierwinkelgeschwindigkeit oder der Lenkwinkelgeschwindigkeit bzw. deren Ableitung, welche die Lenkdynamik beschreiben,
Bilden eines Signals zum Bestimmen der Eingriffsseite und/oder des Eingriffsrads und/oder der Lenkwinkelrichtung des Fahrzeugs aus der Abweichung zwischen dem aktuell gefilterten und gewichteten Differenzwert und dem vorangegangenen Differenzwert, die die Änderungstendenz des gewichteten Differenzwerts beschreibt und
Einprägen eines Gegenmoments in das Fahrzeug in Abhängigkeit von der Amplitude und der Änderungstendenz des gewichteten Differenzwerts.

2. Verfahren nach Anspruch 1, **dadurch gekennzeichnet, dass** die Änderungstendenz im Hinblick auf ihr Vorzeichen ( +; -) untersucht wird und bei sich änderndem Vorzeichen die Eingriffseite am Fahrzeug gewechselt wird.

3. Verfahren nach Anspruch 1 oder 2, **dadurch gekennzeichnet, dass** das Moment nach der folgenden Beziehung

$$\mathrm{M_G = Vorzeichen\{TSA-}\Delta\dot{\psi}_{Fil}(\boldsymbol{n})\}\mathrm{-\{TSA-}\Delta\dot{\psi}_{Fil}(n\text{-}1)\} \ * \ \mathrm{A}\Delta\dot{\psi}_{Fil} \ *}$$

$$\mathrm{Faktor}$$

mit:

$M_G$: Gegenmoment
$\{\mathrm{TSA}\text{-}\Delta\dot{\psi}_{Fil}(\boldsymbol{n})\}\text{-}\{\mathrm{TSA}\text{-}\Delta\dot{\psi}_{Fil}(n\text{-}1)\}$: Änderungstendenz der gefilterten Giergeschwindigkeit-Regelabweichung
$\mathrm{A}\Delta\dot{\psi}_{Fil}$ : Amplitude der gefilterten Giergeschwindigkeit-Regelabweichung
Faktor: Frei wählbarer Faktor zur Anpassung des Eingriffs an Fahrzeug/Bremse/usw.
in das Fahrzeug eingeprägt wird.

4. Verfahren nach mindestens einem der Ansprüche 1 bis 3 **dadurch gekennzeichnet, dass** zusätzlich zum Einprägen eines Gegenmoments in das Fahrzeug in Abhängigkeit von der Amplitude und der Änderungstendenz des gewichteten Differenzwerts eine Verzögerung in das Fahrzeug in Abhängigkeit von der Amplitude und der Änderungstendenz des gewichteten Differenzwerts eingeprägt wird.

5. Vorrichtung zum Stabilisieren eines Fahrzeugs mit einem durch das Fahrzeug gezogenen Anhänger, welche ein Verfahren nach mindestens einem der Ansprüche 1 bis 4 ausführt.

6. Vorrichtung nach Anspruch 5, **dadurch gekennzeichnet, dass** das Gegenmoment nach der folgenden Beziehung

$$\mathrm{M_G = Vorzeichen\{TSA-}\Delta\dot{\psi}_{Fil}(\boldsymbol{n})\}\mathrm{-\{TSA-}\Delta\dot{\psi}_{Fil}(n\text{-}1)\} \ * \ \mathrm{A}\Delta\dot{\psi}_{Fil} \ *}$$

$$\mathrm{Faktor}$$

mit:

$M_G$: Gegenmoment

$\{TSA-\Delta\dot{\psi}_{Fil}(n)\}-\{TSA-\Delta\dot{\psi}_{Fil}(n-1)\}$: Änderungstendenz der gefilterten Giergeschwindigkeit-Regelabweichung
$A\Delta\dot{\psi}_{Fil}$: Amplitude der gefilterten Giergeschwindigkeit-Regelabweichung
Faktor: Frei wählbarer Faktor zur Anpassung des Eingriffs an Fahrzeug/Bremse/usw. berechnet wird.

**Claims**

1. Method for stabilizing a vehicle having a trailer which is pulled by the vehicle, wherein the vehicle is monitor with respect to rocking motions, and when an unstable rocking motion is detected a counter-torque which substantially damps the rocking motion is impressed into the vehicle, comprising the steps determining the yaw angle speed of the vehicle, determining the reference yaw angle speed in a vehicle model,
forming a difference value from the yaw angle speed and the reference yaw angle speed,
**characterized by** the further steps
weighting the difference value with the derived signal of the reference yaw angle speed or the steering angle speed or the derivative thereof, which describe the steering dynamics,
forming a signal for determining the engagement side and/or the engagement wheel and/or the steering angle direction of the vehicle from the difference between the currently filtered and weighted difference value and the preceding difference value, said difference describing the change tendency of the weighted difference value, and impressing a counter-torque into the vehicle as a function of the amplitude and the change tendency of the weighted difference value.

2. Method according to Claim 1, **characterized in that** the change tendency is examined with respect to its sign (+; -), and when the sign changes the engagement side on the vehicle is changed.

3. Method according to Claim 1 or 2, **characterized in that** the torque is impressed into the vehicle according to the following relationship

$$M_G = \text{Sign}\{TSA-\Delta\dot{\psi}_{Fil}(n)\}-\{TSA-\Delta\dot{\psi}_{Fil}(n-1)\} \; * \; A\Delta\dot{\psi}_{Fil} \; *$$

factor
where:

$M_G$: counter-torque
$\{TSA-\Delta\dot{\psi}_{Fil}(n)\} - (TSA-\Delta\dot{\psi}_{Fil}(n-1)\}$: change tendency of the filtered yaw speed control error
$A\Delta\dot{\psi}_{Fil}$: amplitude of the filtered yaw speed control error factor: freely selectable factor for adapting the engagement in the vehicle/brake etc.

4. Method according to at least one of Claims 1 to 3, **characterized in that** in addition to the impressing of a counter-torque into the vehicle as a function of the amplitude and the change tendency of the weighted difference value, a deceleration is impressed into the vehicle as a function of the amplitude and the change tendency of the weighted difference value.

5. Device for stabilizing a vehicle having a trailer which is pulled by the vehicle and which carries out a method according to at least one of Claims 1 to 4.

6. Device according to Claim 5, **characterized in that** the counter-torque is calculated according to the following relationship:

$$M_G = \text{Sign}\{TSA-\Delta\dot{\psi}_{Fil}(n)\}-\{TSA-\Delta\dot{\psi}_{Fil}(n-1)\} \; * \; A\Delta\dot{\psi}_{Fil} \; *$$

factor
where:

$M_G$: counter-torque

{TSA-$\Delta\dot{\psi}_{Fil}$(n)}–{TSA-$\Delta\dot{\psi}_{Fil}$(n-1)}: tendency of the filtered yaw speed control error

A$\Delta\dot{\psi}_{Fil}$: amplitude of the filtered yaw speed control error factor: freely selectable factor for adapting the engagement to the vehicle/brake etc. is calculated.

**Revendications**

1.  Procédé de stabilisation d'un véhicule présentant une remorque tirée par le véhicule, les déplacements de lacet du véhicule étant surveillés et en cas de détection d'un déplacement instable de lacet, un couple opposé qui amortit essentiellement le déplacement de lacet étant imprimé au véhicule, le procédé comportant les étapes qui consistent à :

    déterminer la vitesse angulaire de lacet du véhicule,
    déterminer la vitesse angulaire de lacet de référence dans un modèle du véhicule et
    former la valeur de la différence entre la vitesse angulaire de lacet et la vitesse angulaire de lacet de référence, le procédé étant en outre **caractérisé par** les étapes supplémentaires qui consistent à :

    pondérer la valeur de différence avec le signal déduit de la vitesse d'angle de lacet de référence ou de la vitesse d'angle de direction ou leur dérivée qui décrivent la dynamique de direction,
    former un signal de détermination du côté d'action, de la roue d'action et/ou de la direction de l'angle de direction du véhicule à partir de l'écart entre la valeur actuelle de différence filtrée et pondérée et la valeur de différence précédente, qui décrit la tendance de la modification de la valeur de différence pondérée et imprimer un couple opposé dans le véhicule en fonction de l'amplitude et de la tendance à la modification de la valeur de différence pondérée.

2.  Procédé selon la revendication 1, **caractérisé en ce que** le signe (+, -) de la tendance à la variation est examiné et **en ce que** le côté d'action sur le véhicule est inversé lorsque le signe change.

3.  Procédé selon les revendications 1 ou 2, **caractérisé en ce que** le couple imprimé dans le véhicule est calculé selon l'équation suivante :

$$M_g = \text{signe } \{TSA-\Delta\dot{\psi}_{Fil}(n)\}-\{TSA-\Delta\dot{\psi}_{Fil}(n-1)\}*A\Delta\dot{\psi}_{Fil}*\text{facteur}$$

    avec
    $M_g$ : couple opposé
    {TSA-$\Delta\dot{\psi}_{Fil}$(n)}–{TSA-$\Delta\dot{\psi}_{Fil}$(n-1)} : tendance à la modification de la vitesse de lacet filtrée - écart de réglage
    A-$\Delta\dot{\psi}_{Fil}$ : amplitude de la vitesse de lacet filtrée - écart de réglage
    facteur : facteur sélectionné librement en vue de l'adaptation de l'action sur le véhicule, les freins, etc.

4.  Procédé selon au moins l'une des revendications 1 à 3, **caractérisé en ce qu'**en plus d'imprimer un couple opposé dans le véhicule en fonction de l'amplitude et de la tendance à la modification de la valeur de différence pondérée, un ralentissement est imprimé au véhicule en fonction de l'amplitude et de la tendance à la modification de la valeur de différence pondérée.

5.  Dispositif de stabilisation d'un véhicule doté d'une remorque tractée par le véhicule et qui exécute un procédé selon au moins l'une des revendications 1 à 4.

6.  Dispositif selon la revendication 5, **caractérisé en ce que** le couple opposé est calculé selon l'équation suivante :

$$M_g = \text{signe } \{TSA-\Delta\dot{\psi}_{Fil}(n)\}-\{TSA-\Delta\dot{\psi}_{Fil}(n-1)\}*A\Delta\dot{\psi}_{Fil}*\text{facteur}$$

    avec
    $M_g$ : couple opposé
    {TSA-$\Delta\dot{\psi}_{Fil}$(n)}–{TSA-$\Delta\dot{\psi}_{Fil}$(n-1)} : tendance à la modification de la vitesse de lacet filtrée - écart de réglage
    A-$\Delta\dot{\psi}_{Fil}$ : amplitude de la vitesse de lacet filtrée - écart de réglage

facteur : facteur sélectionné librement en vue de l'adaptation de l'action sur le véhicule, les freins, etc.

# Fig. 1

Fig. 2

Fig. 3

EP 1 758 774 B1

## Fig. 4

**a)**

Erkennung    Eingriff

TSA-DPSIP-Signal
(tiefpass-gefiltertes und über
Lenkdynamik korrigiertes DPSIP)

**b)**

+1
-1

Triggersignal für Eingriff
= sign (TSA-DPSIP(n) - TSA-DPSIP(n-1))
+1: Eingriff erzeugt Moment im Uhrzeigersinn
-1: Eingriff erzeugt Moment gegen Uhrzeigersinn

**c)** Beispiel-Darstellung des Fahrzeugs
Annahme: Fahrer lenkt nicht
(Gierrate = Regelabweichung)
und Druckschere an Vorderachse
entsteht rein aus TSA-Druck an
einem und Null Druck an anderem Rad.

**d)**

Momentenanforderung
M=sign(TSA-DPSIP(n)
-TSA-DPSIP(n-1))
*Amplitudensignal
* Faktor

$M_{G1}$  48  $M_{G2}$

**e)**

rechtes Rad    linkes Rad

Druckanforderung
(Druckschere wird im Beispiel nur
durch abwechselnde Drücke an
Vorderrädern erzeugt. Kann im
gebremsten Fall auch durch
Abbau erfolgen.)

**61**

$\Delta\dot{\psi}$ (Gierratendifferenz (Model: Sensor))

Gefilterte
Modellgierratenabweichung → Filterung von $\Delta\dot{\psi}$ — 52

Suche nach Halbwellen
im Eingangssignal — 53

Halbwelle
erkannt ? — 54

**59**

Halbwellenzähler = 0

Halbwelle
gültig ? — 55

Halbwellenzähler + 1 — 56

Zähler > = N — 57

**Fig. 5**

TSA-Eingriff — 58

# Fig. 6

Dieser Scheitelwert quantifiziert die folgenden
Giermomentanforderungen.

dt

60

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19964048 A1
- DE 10032230 A1
- EP 0765787 B1
- EP 0898049 A2
- DE 10048418 A1
- WO 2004041614 A
- WO 2004041612 A1